(19) Europäisches Patentamt
European Patent Office
Office européen des brevets

(11) EP 3 611 211 B1

(12) **EUROPEAN PATENT SPECIFICATION**

(45) Date of publication and mention of the grant of the patent:
**10.02.2021 Bulletin 2021/06**

(21) Application number: **18784136.6**

(22) Date of filing: **06.04.2018**

(51) Int Cl.:
***C08G 64/02*** *(2006.01)* ***C08K 5/1575*** *(2006.01)*
***C08L 69/00*** *(2006.01)* ***C08G 18/44*** *(2006.01)*

(86) International application number:
**PCT/JP2018/014809**

(87) International publication number:
**WO 2018/190280 (18.10.2018 Gazette 2018/42)**

(54) **POLYCARBONATE DIOL COMPOSITION AND METHOD FOR PRODUCING SAME**

POLYCARBONATDIOLZUSAMMENSETZUNG UND VERFAHREN ZUR HERSTELLUNG DAVON

COMPOSITION DE POLYCARBONATE DIOL ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2017 JP 2017080791**

(43) Date of publication of application:
**19.02.2020 Bulletin 2020/08**

(73) Proprietor: **Asahi Kasei Kabushiki Kaisha**
**Tokyo 100-0006 (JP)**

(72) Inventors:
- **YABUKI, Hayato**
  **Tokyo 101-8101 (JP)**
- **MASUBUCHI, Tetsuo**
  **Tokyo 101-8101 (JP)**
- **TSUKIMORI, Yasuyuki**
  **Tokyo 101-8101 (JP)**

(74) Representative: **Strehl Schübel-Hopf & Partner**
**Maximilianstrasse 54**
**80538 München (DE)**

(56) References cited:
**EP-A1- 2 940 056**
**WO-A1-02/070584**
**JP-A- H04 239 023**
**JP-A- 2014 185 320**
**JP-A- 2016 027 119**
**JP-A- 2017 071 684**
**JP-A- 2017 071 685**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a polycarbonate diol composition and a method for producing a polycarbonate diol composition.

### Background Art

As a soft segment used in polyurethanes and thermoplastic elastomers such as urethane-based, ester-based, and amide-based thermoplastic elastomers, the use of a polycarbonate polyol which can impart excellent thermal resistance, weather resistance, hydrolysis resistance, oil resistance, and chemical resistance is conventionally proposed.

For such a polycarbonate polyol, a polycarbonate polyol in which 1,6-hexanediol alone is used as a diol component is typically used. However, such a polycarbonate polyol is crystalline and solid at ordinary temperature, and thus has a difficulty in handling.

To solve these problems, a method for producing a polycarbonate diol by using 1,3-propanediol as a diol component is proposed. For example, Patent Literature 1 discloses synthesizing a polycarbonate diol by using 1,3-propanediol alone as a diol component, and Patent Literatures 2 to 4 disclose synthesizing a polycarbonate diol by using 1,3-propanediol and other diols as diol components.

### Citation List

### Patent Literature

Patent Literature 1: Japanese Unexamined Patent Application Publication No. 2004-35636
Patent Literature 2: WO 2002/070584
Patent Literature 3: WO 2006/088152
Patent Literature 4: Japanese Unexamined Patent Application Publication No. 2014-185320

### Summary of Invention

### Technical Problem

However, as in Patent Literature 1, the polycarbonate diol obtained by using 1,3-propanediol alone as a diol component has a problem in that cloudiness or separation of the solution occurs due to insufficient compatibility with a solvent. Additionally, polyurethanes obtained by using polycarbonate diols disclosed in Patent Literatures 2 to 4 as raw material compounds are required to have further improved sunscreen resistance, scratch resistance, and scratch recovery. Therefore, no polycarbonate diol that is non-crystalline, has excellent compatibility with a solvent, and can impart excellent sunscreen resistance, scratch resistance, scratch recovery, flexibility, and low-temperature characteristics, when used as a raw material compound for a polyurethane or the like, is yet obtainable.

An object of the present invention is to provide a novel polycarbonate diol composition that is non-crystalline, has excellent compatibility with a solvent, and can impart excellent sunscreen resistance, scratch resistance, and scratch recovery, when used as a raw material compound (raw material monomer) for a polyurethane, and a method for producing thereof.

### Solution to Problem

The present inventors conducted intensive studies and, as a result, found that a polycarbonate diol having specific repeating units in specific proportions is non-crystalline, has excellent compatibility with a solvent, and can impart excellent sunscreen resistance, scratch resistance, and scratch recovery as compared with a typical polycarbonate polyol, when used as a raw material compound (raw material monomer) for a polyurethane or a thermoplastic elastomer, thereby accomplished the present invention.

That is, the present invention is as follows:

(1) A polycarbonate diol composition comprising a polycarbonate diol having a repeating unit represented by the following formula (A):

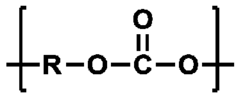 (A)

wherein R represents a divalent hydrocarbon group having 3 to 20 carbon atoms, and a terminal hydroxyl group, wherein the repeating unit represented by formula (A) comprises a repeating unit of the following formula (B) :

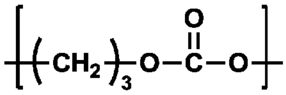 (B) ;

a proportion of the repeating unit represented by formula (B) with respect to the total repeating unit represented by formula (A) is 84.0% by mass or more and 99.4% by mass or less;
a number-average molecular weight of the polycarbonate diol is 300 or more and 20,000 or less; and
a ratio of primary terminal OH of the polycarbonate diol is 95% or more and the polycarbonate diol composition comprises 1,3-dioxan-2-one, wherein a content of 1,3-dioxan-2-one with respect to the repeating unit represented by formula (A) is 0.005 to 0.045 in a molar ratio.

(2) A polycarbonate diol composition comprising a polycarbonate diol having a repeating unit represented by the following formula (A):

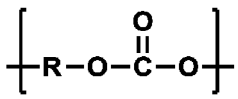 (A)

wherein R represents a divalent hydrocarbon group having 3 to 20 carbon atoms, and a terminal hydroxyl group, wherein the repeating unit represented by formula (A) comprises a repeating unit of the following formula (B) :

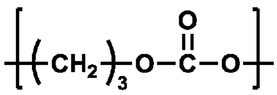 (B) ;

a proportion of the repeating unit represented by formula (B) with respect to the total repeating unit represented by formula (A) is 84.0% by mass or more and 99.4% by mass or less;
a number-average molecular weight of the polycarbonate diol is 300 or more and 20,000 or less; and
a proportion of a repeating unit represented by the following formula (C):

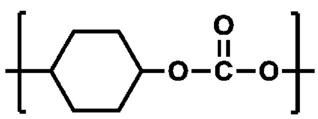 (C)

with respect to the total repeating unit represented by formula (A) is 1.0% by mass or less.

(5) A method for producing the polycarbonate diol composition according to any one of (1) to (4), comprising a step of adjusting the content of 1,3-dioxan-2-one with respect to a total amount of the polycarbonate diol.

Advantageous Effects of Invention

The present invention can provide a polycarbonate diol composition that is non-crystalline, has excellent compatibility with a solvent, and can impart excellent sunscreen resistance, scratch resistance, and scratch recovery, when used as a raw material compound (raw material monomer) for a polyurethane or a thermoplastic elastomer, and a method for producing thereof.

Description of Embodiments

Hereinafter, the embodiments of the present invention (hereinafter abbreviated as "the present embodiment") will be described in detail. The present invention is not limited to the following embodiments and can be appropriately modified and carried out within the scope thereof.

As used herein, the terms "sunscreen resistance", "scratch resistance", "scratch recovery", "flexibility", and "low-temperature characteristics" refer to properties capable of imparting sunscreen resistance, scratch resistance, scratch recovery, flexibility, and low-temperature characteristics, respectively, when the polycarbonate diol composition of the present invention is used as a raw material compound (raw material monomer) for a polyurethane or a thermoplastic elastomer.

[Polycarbonate diol composition]

The polycarbonate diol composition of the present embodiment comprises a polycarbonate diol having a repeating unit represented by the following formula (A) (hereinafter referred to as "repeating unit (A)") and a terminal hydroxyl group. The repeating unit (A) comprises a repeating unit represented by the following formula (B) (hereinafter referred to as "repeating unit (B)"). The proportion of the repeating unit (B) with respect to the total repeating unit (A) (hereinafter referred to as "proportion of unit (B)") is 84.0% by mass or more and 99.4% by mass or less. The number-average molecular weight of the polycarbonate diol is 300 or more and 20,000 or less and the polycarbonate diol composition comprises 1,3-dioxan-2-one, wherein a content of 1,3-dioxan-2-one with respect to the repeating unit represented by formula (A) is 0.005 to 0.045 in a molar ratio. In addition, the polycarbonate diol satisfies the following conditions (X1) and/or (X2).

Condition (X1): the ratio of primary terminal OH of the polycarbonate diol is 95% or more.

Condition (X2): the proportion of the repeating unit represented by the following formula (C) ("hereinafter referred to as "repeating unit (C)") with respect to the total repeating unit represented by the following formula (A) is 1.0% by mass or less.

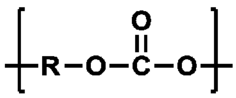 (A)

wherein R represents a divalent hydrocarbon group having 3 to 20 carbon atoms.

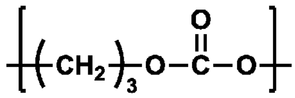 (B)

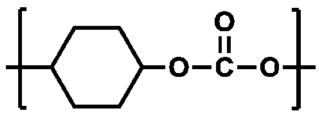 (C)

The features described above enable the polycarbonate diol composition of the present embodiment to be non-crystalline, to have excellent compatibility with a solvent, and to impart excellent sunscreen resistance, scratch resistance, and scratch recovery, when used as a raw material compound (raw material monomer) for a polyurethane or a thermoplastic elastomer. The mechanism of the polycarbonate diol composition of the present embodiment to produce these effects is unclear, but it can be presumed as follows. However, the present invention is not limited to this presumption in any way. That is, the main cause is to contain the repeating unit represented by formula (B) in the repeating unit represented by formula (A) in a specific proportion, and a disruptive effect on the regularity of the structure of the polycarbonate diol can be thereby suitably obtained. It is presumed that the polycarbonate diol composition of the present embodiment has thus no crystal orientation and excellent compatibility with a solvent, and can impart excellent sunscreen resistance, scratch resistance, and scratch recovery, when used as a raw material compound for a polyurethane.

In the polycarbonate diol composition of the present embodiment, the proportion of the repeating unit (B) with respect to the total repeating unit (A) is 84.0% by mass or more and 99.4% by mass or less, preferably 85.0% by mass or more and 99.4% by mass or less, and more preferably 86.0% by mass or more and 99.0% by mass or less. With the

proportion being 84.0% by mass or more, sunscreen resistance and scratch resistance become excellent and with the proportion being 99.4% by mass or less, compatibility with a solvent becomes excellent. The proportion described above can be determined by the method described in Examples below.

In formula (A), examples of the divalent hydrocarbon group R include an alkylene group (for example, a linear or branched alkylene group), a cycloalkylene group, a combination group of an alkylene group and a cycloalkylene group. Examples of the linear alkylene group include trimethylene, tetramethylene, pentamethylene, hexamethylene, heptamethylene, octamethylene, nonamethylene, decamethylene, dodecamethylene, and icosamethylene. Examples of the branched alkylene group include 1-methyl-trimethylene, 2-methyl-trimethylene, 2,2-dimethyl-trimethylene, 3-methyl-pentamethylene, 2-methyl-octamethylene, 2-isopropyl-tetramethylene, 2-ethyl-hexamethylene, 2,4-dimethyl-pentamethylene, and 2,4-diethyl-pentamethylene. Examples of the cycloalkylene group include 1,2-cyclohexylene, 1,3-cyclohexylene, and 1,4-cyclohexylene. The combination group of an alkylene group and a cycloalkylene group include, for example, groups represented by the following formula (A1) and (A2).

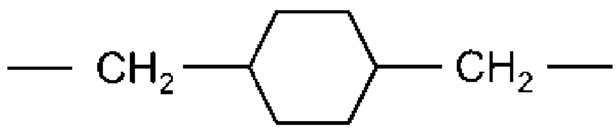
(A1)

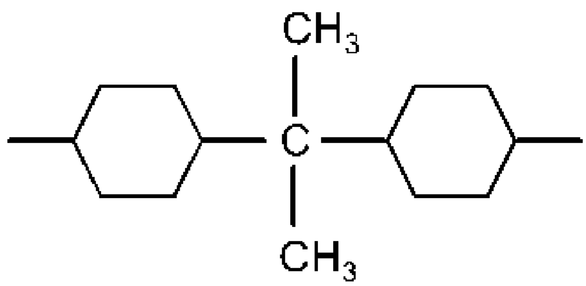
(A2)

Among them, R is preferably a $C_{4-10}$ alkylene group, and more preferably a $C_{4-6}$ alkylene group, from the viewpoint of further improving at least one physical property, such as abrasion resistance, extensibility, and breaking strength of the polyurethane. In particular, when R is a 2-methyl-trimethylene group or a tetramethylene group, abrasion resistance of the polyurethane tends to be further improved, when R is a pentamethylene group, extensibility of the polyurethane tends to be further improved, and when R is a hexamethylene group, breaking strength of the polyurethane tends to be further improved.

The number-average molecular weight of the polycarbonate diol of the present embodiment is 300 or more and 20,000 or less, preferably 350 or more and 10,000 or less, and more preferably 400 or more and 5,000 or less. When the number-average molecular weight is 300 or more, flexibility and low-temperature characteristics tend to be much better, and when the number-average molecular weight is 20,000 or less, low viscosity and fabricability tend to be further improved. The average molecular weight of the polycarbonate diol can be determined by the method described in Examples below.

When the ratio of primary terminal OH of the polycarbonate diol of the present embodiment is 95% or more, the reaction rate in the production (synthesis) of a polyurethane (in particular, thermoplastic polyurethane) by using the polycarbonate diol composition of the present embodiment as a raw material compound tends to increase. From the similar viewpoint, the ratio of primary terminal OH is preferably 97% or more, and more preferably 99% or more.

As used herein, the ratio of primary terminal OH refers the value calculated in accordance with the following expression (1) from a peak area value of a chromatogram, which can be determined by heating the polycarbonate diol (10 g to 40 g) at a temperature of 160°C to 200°C under a pressure of 0.4 kPa or less while stirring to obtain a fraction corresponding to 0.5 to 2% by mass of the polycarbonate diol, then collecting this fraction with the use of 10 to 40 g of acetone as a solvent, and subjecting the collected solution to gas chromatography (GC).

$$\text{The ratio of primary terminal OH (\%)} = B \div A \times 100 \quad (1)$$

A: Sum of peak areas of alcohols including diols

B: Sum of peak areas of diols having primary OH groups at both terminals

The polycarbonate diol composition of the present embodiment contains 1,3-dioxan-2-one. The polycarbonate diol composition of the present embodiment can obtain further improved flexibility and scratch recovery by also containing 1,3-dioxan-2-one.

The content of 1,3-dioxan-2-one with respect to the repeating unit (A) is 0.005 or more and 0.045 or less. With a content being 0.001 or more, flexibility and scratch recovery tend to be further improved, and with a content being 0.050 or less, when the polycarbonate diol of the present embodiment is used as a raw material compound (raw material monomer) to produce (synthesize) a polyurethane, darkening of the resulting polyurethane due to low refractive index of 1,3-dioxan-2-one as compared with polycarbonate diol tend to be further inhibited. In addition, with the content being 0.05 or less, the coated film of the polycarbonate diol composition of the present embodiment tends to be less fragile, and scratch recovery becomes further excellent.

When the proportion of the repeating unit (C) with respect to the total repeating unit (A) is 1.0% by mass or less, surface hardness is improved, and scratch resistance is improved. From the similar viewpoint, the proportion described above is preferably 0.5% by mass or less, and more preferably 0.1% by mass or less, and further preferably 0.

[Production method of polycarbonate diol composition]

Then, a method for producing the polycarbonate diol composition of the present embodiment will be described.

The polycarbonate diol composition of the present embodiment can be obtained by transesterification between a diol component (raw material diol) containing at least a diol compound represented by 1,3-propanediol and formula (D) : HO-$R^1$-OH (wherein $R^1$ represents a divalent hydrocarbon group having 4 to 20 carbon atoms) and carbonate ester. The diol component may also contain other polyols.

1,3-Propanediol may be petroleum-derived or plant-derived. Among them, there is no difference in physical properties of polyurethanes that can be obtained by the reaction between polycarbonate diol and isocyanate, regardless of the compound used.

Specific examples of the diol compound represented by formula (D) include a linear alkylene diol such as 1,4-butanediol, 1,5-pentanediol, 1,6-hexanediol, 1,7-heptanediol, 1,8-octanediol, 1,9-nonanediol, 1,10-decanediol, 1,12-dodecanediol, and 1,20-icosanediol; a branched alkylene diol such as 1-methyl-1,3-propanediol, 2-methyl-1,3-propanediol, neopentyl glycol, 3-methyl-1,5-pentanediol, 2-methyl-1,8-octanediol, 2-isopropyl-1,4-butanediol, 2-ethyl-1,6-hexanediol, 2-isopropyl-1,4-butanediol, 2-ethyl-1,6-hexanediol, 2,4-dimethyl-1,5-pentanediol, and 2,4-diethyl-1,5-pentanediol; a cycloalkylene diol such as 1,2-cyclohexanediol, 1,3-cyclohexanediol, and 1,4-cyclohexanediol; and a diol in which $R^1$ is a combination group of an alkylene group and a cycloalkylene group such as 1,4-cyclohexanedimethanol and 2-bis(4-hydroxycyclohexyl)-propane. These diol compounds can be used alone or in combination of two or more. Among them, the diol compound is preferably a $C_{4-10}$ alkylene diol, and more preferably a $C_{4-6}$ alkylene diol. In particular, when the diol compound is 2-methyl-1,3-propanediol or 1,4-butanediol, the polyurethane produced tends to have further excellent abrasion resistance, when the diol compound is 1,5-pentanediol, the polyurethane produced tends to have further excellent extensibility, and when the diol compound is 1,6-hexanediol, the polyurethane produced tends to have further excellent breaking strength.

Examples of the carbonate ester include, but not particularly limited to, alkylene carbonate, dialkyl carbonate, and diaryl carbonate. Examples of the alkylene carbonate include ethylene carbonate, trimethylene carbonate, 1,2-propylene carbonate, 1,2-butylene carbonate, 1,3-butylene carbonate, and 1,2-pentylene carbonate. Examples of the dialkyl carbonate include dimethyl carbonate, diethyl carbonate, and di-n-butyl carbonate. An example of the dialkylene carbonate includes diphenyl carbonate. These carbonate esters can be used alone or in combination of two or more. Among them, ethylene carbonate, dimethyl carbonate, diethyl carbonate, and di-n-butyl carbonate are preferable, and ethylene carbonate and di-n-butyl carbonate are more preferable.

In the production method of the present embodiment, the reaction temperature during the transesterification is not particularly limited, and is preferably 120 to 280°C, and more preferably 140 to 230°C.

In the production method of the present embodiment, a catalyst may be used from the viewpoint of improving the reaction rate during the transesterification. Examples of the catalyst include, but not particularly limited to, a titanium compound such as titanium tetraisopropoxide, and titanium tetra-n-butoxide; a tin compound such as di-n-butyltin dilaurate, di-n-butyltin oxide, and dibutyltin diacetate; metal salts of acetic acid such as magnesium acetate, calcium acetate, zinc acetate, and lead acetate. These catalysts can be used alone or in combination of two or more. Among them, a titanium compound is preferably used. The content of these catalysts is preferably 1 mass ppm or more and 300 mass ppm or less, and more preferably 30 mass ppm or more and 200 mass ppm or less, with respect to the total amount of the reaction raw material.

When 1,3-propanediol is used as the diol component (raw material diol), it is discharged as 1,3-dioxan-2-one to the outside of the system in reducing the pressure, which makes the final composition ratio different from the feed composition ratio. By reflecting that, it is preferable that the ratio of 1,3-propanediol in the diol component (raw material diol) is determined, so that the proportion of the repeating unit represented by formula (B) with respect to the repeating

unit represented by formula (A) in the polycarbonate diol composition obtained is adjusted.

The method for producing the polycarbonate diol composition of the present embodiment comprises a step of adjusting the content of 1,3-dioxan-2-one, with respect to the total amount of the polycarbonate diol. This step may be either of step (X) of increasing the content of 1,3-dioxan-2-one or step (Y) of decreasing the content of 1,3-dioxan-2-one. Specific examples of methods for adjusting the content include the following method and the following method may be used alone or in combination of two or more. Consequently, the content of 1,3-dioxan-2-one can be adjusted to the above-described preferred range.

(X-1) a method for increasing the content of 1,3-dioxan-2-one by adding 1,3-dioxan-2-one to the obtained polycarbonate diol composition
(Y-1) a method for decreasing the content of 1,3-dioxan-2-one by heating and stirring the obtained polycarbonate diol composition at 120 to 200°C
(Y-2) a method for decreasing the content of 1,3-dioxan-2-one by adding a diol compound used as a diol component to the obtained polycarbonate diol composition and by heating and stirring the mixture at 120 to 200°C
(Y-3) a method for decreasing the content of 1,3-dioxan-2-one by distilling the obtained polycarbonate diol composition to extract 1,3-dioxan-2-one

The content of 1,3-dioxan-2-one can be determined by $^1$H-NMR (400 MHz). More specifically, it can be measured by the method described in Examples below.

Examples

The present invention will now be described in further detail with reference to Examples, but the present embodiment is in no way limited by these Examples. Parts in Examples represent parts by mass unless otherwise specified.

In Examples and Comparative Examples below, physical properties of the polycarbonate diol and the polyurethane film are tested in accordance with the following testing method.

<Testing method>

[1. OH Value]

12.5 g of acetic anhydride was diluted in measuring cylinder to 50 ml total with pyridine to prepare an acetylation reagent. In a 100 ml eggplant flask, 2.5 to 5.0 g of the sample was accurately weighed. After adding 5 ml of the acetylation reagent and 10 ml of toluene by a volumetric pipette, the flask was equipped with a condenser to stir and heat at 100°C for 1 hour. To the mixture was added 2.5 mL of distilled water with a volumetric pipette and the mixture was heated and stirred for further 10 minutes. After cooling for 2 to 3 minutes, 12.5 mL of ethanol was added and then 2 to 3 drops of phenolphthalein was added as an indicator, and then the mixture was titrated with a 0.5 mol/L potassium hydroxide ethanolic solution. To a 100 mL eggplant flask, 5 mL of the acetylation reagent, 10 mL of toluene, and 2.5 mL of distilled water were added to heat and stir for 10 minutes, and then titrated in the same manner (blank test). Based on these results, the OH value was determined by the expression represented by the following expression (2).

$$\text{OH value (mg-KOH/g)} = \{(b-a) \times 28.05 \times f\}/e \qquad (2)$$

a: titration amount of sample (mL)
b: titration amount of blank test (mL)
e: sample mass (g)
f: factor of titrant

[2. Number-average molecular weight]

Substantially all of the terminal groups of the polycarbonate diol of the polycarbonate diol composition obtained in each Example and Comparative Example were hydroxyl groups based on the measurement of $^{13}$C-NMR (270 MHz). Further, the acid value of each polymer was measured by titration with KOH and the acid value was 0.01 or less. Subsequently, the number-average molecular weight of each polymer was determined in accordance with the following expression (3).

$$\text{Number-average molecular weight} = 2/(\text{OH value} \times 10^{-3}/56.11) \qquad (3)$$

[3. Copolymerization molar ratio]

The copolymerization molar ratio of the polycarbonate diol in the polycarbonate diol composition obtained in each Example and Comparative Example was measured as follows. In a 100 ml eggplant flask, 1 g of polycarbonate diol (sample) obtained in each Example and Comparative Example, 30 g of ethanol, and 4 g of potassium hydrate were added to react at 100°C for 1 hour. After cooling to the room temperature, 2 to 3 drops of phenolphthalein as an indicator were added, and then the mixture was neutralized with hydrochloric acid. After cooling the mixture for 1 hour in a refrigerator, the precipitated salts were removed by filtration and analyzed by gas chromatography. This analysis was conducted by using gas chromatography GC-14B (produced by Shimadzu Corporation) equipped with DB-WAX (produced by J&W Scientific) as a column, diethylene glycol diethyl ester as an internal standard, and FID as a detector. The temperature rise profile of the column was such that the temperature was maintained at 60°C for 5 minutes and then raised at 10°C/min up to 250°C. From the area value obtained, the molar ratio A of 1,3-propanediol to the total amount of 1,3-propanediol and a diol compound represented by the formula (D): HO-$R^1$-OH (wherein $R^1$ represents a divalent hydrocarbon group having 4 to 20 carbon atoms) (hereinafter referred to as "diol compound (D)"), and the molar ratio B of the diol compound to the total amount of 1,3-propanediol and a diol compound (D) were determined. The molar ratio A was defined as the copolymerization molar ratio of the repeating unit (B) to the repeating unit (A), and the molar ratio B was defined as the copolymerization molar ratio of the repeating unit represented by the following formula (E) (hereinafter referred to as "repeating unit (E)") to the repeating unit (A):

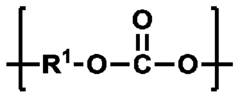 (E)

wherein, $R^1$ is the same as $R^1$ in the formula (D).

[4. Content (proportion) of repeating unit (B)]

The copolymerization molar ratio of the repeating unit (B) and the copolymerization molar ratio of the repeating unit (E) which were obtained by the method described above were used to determine the content (proportion) of the repeating unit (B) in accordance with the following expression (4).

$$\text{Proportion of unit (B)} = X \div (X + Y) \times 100 \qquad (4)$$

X: copolymerization molar ratio of repeating unit (B) × molecular weight of repeating unit (B)
Y: copolymerization molar ratio of repeating unit (E) × total amount of the molecular weight of repeating unit (E)

[5. Content of 1,3-dioxan-2-one]

The content of 1,3-dioxan-2-one with respect to the repeating unit (A) (molar ratio) was determined by $^1$H-NMR measurement using Avance600 (product name) manufactured by Bruker BioSpin Corporation. Specific measurement conditions were as follows.

(Measurement condition) $^1$H-NMR Apparatus: AVANCE600 (manufactured by Bruker BioSpin Corporation)

Observed nucleus (frequency): $^1$H (600 MHz)
Concentration: 3% $CDCl_3$
Shift reference: TMS (0 ppm)
Cumulative number: 512 times

In the above measurement, the integrated value of the following signal was divided by the number of hydrogens measured, and each molar ratio was determined by the resulting value.

1,3-dioxan-2-one: integrated value near 4.45 ppm ÷ 4

The value of the repeating unit (A) was defined as the sum of the following I to IV.

I: repeating unit (B) component derived from 1,3-propanediol: integrated value near 2.05 ppm (peak a in the following formula G) ÷ 2

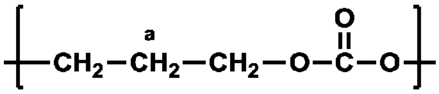

(G)

II: repeating unit component derived from 2-methyl-1,3-propanediol: integrated value near 2.22 ppm (peak b in the following formula H) ÷ 1

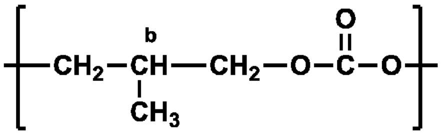

(H)

III: repeating unit component derived from other diols: integrated value near 4.15 ppm (peak c in the following formula I) ÷ 4

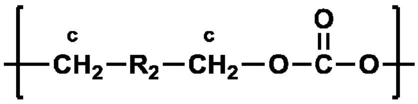

(I)

(I) wherein, $R_2$ represents a divalent hydrocarbon having 2 to 18 carbon atoms except for a methylene group and a methylmethylene group.

IV: terminal diol: integrated value near 3.60 to 3.75 ppm (peak of a methylene group adjacent to OH) ÷ 2

[6. Ratio of Primary terminal OH]

The ratio of primary terminal OH of polycarbonate diol in the polycarbonate diol composition obtained in each Example and Comparative Example was calculated in accordance with the following expression (1) from the peak area value of a chromatogram, which could be determined by heating the polycarbonate diol (10 g to 40 g) obtained in each Example and Comparative Example at a temperature of 160°C to 200°C under a pressure of 0.4 kPa or less while stirring to obtain a fraction corresponding to 0.5 to 2% by mass of the polycarbonate diol, then collecting this fraction with the use of 10 to 40 g of acetone as a solvent, and subjecting the collected solution to gas chromatography (GC).

$$\text{The ratio of primary terminal OH (\%)} = B \div A \times 100 \quad (1)$$

A: Sum of peak areas of alcohols including diols

B: Sum of peak areas of diols having primary OH groups at both terminals

[7. Compatibility with solvent]

To a sample bottle of 20 g, 3 g of polycarbonate diol obtained in each Example and Comparative Example and 7 g of butyl acetate were added to make a solution with a solid content of 30%, and its appearance was observed to evaluate the compatibility in accordance with the following evaluation criteria.

◎: Components quickly became compatible state and the solution was colorless and transparent.

○: Components quickly became compatible state by heating and stirring.
×: Compatibility was poor and the solution was clouded or separated.

[8. Sunscreen resistance]

A polyurethane film having a thickness of 0.04 to 0.06 mm obtained by the method described below was formed and this film was loaded with 2 g of a sunscreen (Neutrogena Ultra Sheer Dry-Touch Sunscreen Broad Spectrum SPF 30) per 4 square centimeters and heated at 80°C for 4 hours. Subsequently, the sunscreen was washed off with a neutral soap and the appearance change of the film was observed to evaluate the sunscreen resistance in accordance with the following evaluation criteria.

◎: Appearance of coated film was almost the same.
○: Appearance of coated film was slightly changed.
Δ: Appearance of coated film was changed but there was no problem in practical use.
×: Coated film was broken and unable to withstand practical use.

[9. Scratch resistance]

A polyurethane film having a thickness of 0.04 to 0.06 mm obtained by the method described below was scratched with a brass brush for 200 times while applying a load of 750 g and the change of its appearance was observed to evaluate the scratch resistance in accordance with the following evaluation criteria.

◎: Appearance of coated film was almost the same.
○: Scratch was observed if coated film was closely looked at.
Δ: Appearance of coated film was changed but there was no problem in practical use.
×: Coated film was broken and unable to withstand practical use.

[10. Scratch recovery]

A polyurethane film having a thickness of 0.04 to 0.06 mm was formed on a glass plate and glossiness thereof was measured. After scratching the film with a brass brush for 500 times while applying a load of 750 g, the film was left to stand for 1 week at 23°C and humidity of 50% and then measured glossiness to evaluate the scratch recovery in accordance with the following evaluation criteria.

◎: Glossiness was recovered to 90% or more of glossiness before evaluation
○: Glossiness was recovered to 80% or more of glossiness before evaluation
Δ: Glossiness was recovered to 70% or more of glossiness before evaluation
×: Glossiness was less than 70% of glossiness before evaluation

(Example 1)

A 1-L separable flask equipped with an oldershaw with vacuum jacket and having a stirrer, thermometer, reflux head at the top was charged with 371 g of 1,3-propanediol, 1 g of 1,6-hexanediol, and 430 g of ethylene carbonate, and 0.08 g of titanium tetrabutoxide was added thereto as a catalyst. The mixture was heated in an oil bath set at 190°C and allowed to react at an internal temperature of the flask of 160 to 170°C in a vacuum of 13 to 5 kPa for 12 hr, while partly taking out a fraction from reflux head. Then the mixture was heated in an oil bath set at 180°C to an internal temperature of the flask of 155 to 175°C and reduced to a vacuum of 0.5 kPa, thereby removed 1,3-propanediol, 1,6-hexanediol, and ethylene carbonate that were remained in the separable flask. From this reaction, a polycarbonate diol composition having a viscous solution form at ordinary temperatures was obtained.

(Examples 2 to 12, and 14 to 17) Examples 12 and 16 being not according to the invention

A polycarbonate diol composition having a viscous solution form at ordinary temperatures was obtained in a similar manner as in Example 1, except that the types of raw materials and charge amounts described in Table 1 were changed.

(Example 13)

A 1-L separable flask (flask) equipped with an oldershaw with vacuum jacket and having a stirrer, thermometer, reflux head at the top was charged with 346 g of 1,3-propanediol, 40 g of 1,6-hexanediol, and 507 g of dimethyl carbonate. The internal temperature of the flask was raised to 180°C under nitrogen atmosphere to flow methanol out, and the mixture was allowed to react until the flow out of methanol was almost completed. Thereafter, the pressure was gradually reduced to 100 mmHg, and while distilling off the mixture of methanol and dimethyl carbonate with stirring, transesterification was conducted at 200°C. From this reaction, a polycarbonate diol composition having a viscous solution form at ordinary temperatures was obtained.

(Comparative Example 1)

A 1-L separable flask (flask) equipped with an oldershaw with vacuum jacket and having a stirrer, thermometer, reflux head at the top was charged with 371 g of 1,3-propanediol and 430 g of ethylene carbonate, and then charged with 0.08 g of titanium tetrabutoxide as a catalyst. The mixture was heated in an oil bath set at 190°C and allowed to react at an internal temperature of the flask of 160 to 170°C in a vacuum of 13 to 5 kPa for 12 hr, while partly taking out a fraction from reflux head. Then, the mixture was heated in an oil bath set at 180°C to an internal temperature of the flask of 155 to 175°C and reduced to a vacuum of 0.5 kPa, thereby removed 1,3-propanediol and ethylene carbonate that were remained in the separable flask. From this reaction, a polycarbonate diol composition having a viscous solution form at ordinary temperatures was obtained.

(Comparative Example 2)

After a reaction vessel equipped with a stirrer, distilling tube, thermometer, nitrogen inlet tube and manhole was replaced with a nitrogen gas, the reaction vessel was charged with 425 parts of plant-derived 1,3-propanediol, 25 parts of 1,4-butanediol, 25 parts of 1,5-pentanediol, 25 parts of 1,6-hexanediol, 569 parts of dimethyl carbonate, and 0.1 parts of titanium tetrabutoxide. The temperature was raised to 180°C under nitrogen atmosphere to flow methanol out, and the mixture was allowed to react until the flow out of methanol was almost completed. Thereafter, the generated methanol and excess dimethyl carbonate were removed under reduced pressure. From this reaction, a polycarbonate diol composition having a viscous solution form at ordinary temperatures was obtained.

(Comparative Examples 3 to 7)

A polycarbonate diol composition having a viscous solution form at ordinary temperatures was obtained in a similar manner as in Comparative Example 1, except that the types of raw materials and charge amounts described in Table 1 were changed.

(Comparative Example 8)

A 2L glass flask equipped with a fractionating column packed with a structured packing and stirring apparatus was charged with 760.9 g (10 mol) of 1,3-propanediol (1,3-PDO), 10.5 g (0.09 mol) of 1,4-cyclohexanediol, and 1053.9 g (11.7 mol) of dimethyl carbonate, and stirred and dissolved at 70°C, then 0.10 g of titanium tetrabutoxide was charged as a catalyst. The mixture was heated and stirred under ordinary pressure at a temperature of 140 to 150°C and reacted for 7 hours while distilling off the mixture of the generated methanol and dimethyl carbonate. Thereafter, the mixture was reacted at a reaction temperature of 150°C to 190°C under a pressure of 10 to 15 kPa for 3 hours, while distilling off the mixture of the generated methanol and dimethyl carbonate. Then, the mixture was reacted at 190°C for 3 hours while gradually decreasing the pressure to 0.5 kPa. From this reaction, a polycarbonate diol composition having a viscous solution form at ordinary temperatures was obtained.

[Production of polyisocyanate]

A four-neck flask equipped with a stirrer, thermometer, reflux condenser, nitrogen inlet tube, and dropping funnel was made to be nitrogen atmosphere, charged with 600 g of hexamethylene diisocyanate, and maintained the internal temperature of a reactor at 70°C with stirring. An isocyanurate catalyst, tetramethylammonium caprylate was added to the flask and when the yield was reached 24% by mass, phosphoric acid was added thereto to stop the reaction. After filtering the reaction solution, thin film evaporator was used to remove unreacted hexamethylene diisocyanate, thereby obtained the polyisocyanate as a production example. The viscosity of the polyisocyanate obtained at 25°C was 1,600 mPa·s, the isocyanate group concentration was 23.0% by mass, the number-average molecular weight was 660,

and residual HDI concentration was 0.2% by mass.

[Preparation of polyurethane film]

To a sample bottle made of glass, 15 g of polycarbonate diol obtained in each Example and Comparative Example, 3 g of the polyisocyanate produced by the method described above, and 18 g of butyl acetate were added and shaken well by a shaker. After verifying that the solution became homogeneous, 0.2 g of 1% by mass of dibutyltin dilaurate was added to shake well. The resulting solution was casted over a glass plate or ABS plate and left at room temperature for five minutes to evaporate the solvent, followed by placing and drying in a drying machine at 80°C for 1 hour, thus obtaining a polyurethane film. The polyurethane film obtained was cured in an environment at a temperature of 23°C and at a humidity of 50% for one week and then used for the evaluation.

[Table 1] Examples 12 and 16 are not according to the invention

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|---|---|---|---|
| PCD Polymerization raw material (g) | 1,3-PRL | 371 | 370 | 368 | 357 | 346 | 327 | 334 | 346 | 346 | 349 | 353 | 355 | 346 | 346 | 346 | 345 | 371 |
| | 2-MPD | - | - | - | - | - | 53 | - | - | - | - | - | - | - | - | - | - | - |
| | 1,4-BDL | - | - | - | - | - | - | 44 | - | - | - | - | - | - | - | - | - | - |
| | 1,5-PDL | - | - | - | - | - | - | - | 36 | - | - | - | - | - | - | - | - | - |
| | 3-MPD | - | - | - | - | - | - | - | - | 40 | - | - | - | - | - | - | - | - |
| | 1,6-HDL | 1 | 3 | 6 | 23 | 40 | - | - | - | - | - | - | - | 40 | 40 | 40 | - | 1 |
| | 1,10-DDL | - | - | - | - | - | - | - | - | - | 51 | - | - | - | - | - | - | - |
| | 1,12-DDDL | - | - | - | - | - | - | - | - | - | - | 49 | - | - | - | - | 69 | - |
| | 1,20-IDL | - | - | - | - | - | - | - | - | - | - | - | 69 | - | - | - | - | - |
| | 1,4-CHDL | - | - | - | - | - | - | - | - | - | - | - | - | - | - | - | - | - |
| | EC | 430 | 430 | 430 | 430 | 430 | 430 | 430 | 430 | 430 | 430 | 430 | 430 | - | 430 | 430 | 430 | 430 |
| | DMC | - | - | - | - | - | - | - | - | - | - | - | - | 507 | - | - | - | - |
| Copolymerization composition mole (%) | 1,3-PRL | 99.5 | 98.9 | 98.0 | 94.2 | 90.1 | 89.8 | 90.3 | 90.0 | 90.3 | 92.1 | 93.0 | 94.9 | 90.2 | 91.0 | 89.9 | 92.5 | 99.5 |
| | 2-MPD | - | - | - | - | - | 10.2 | - | - | - | - | - | - | - | - | - | - | - |
| | 1,4-BDL | - | - | - | - | - | - | 9.7 | - | - | - | - | - | - | - | - | - | - |
| | 1,5-PDL | - | - | - | - | - | - | - | 10.0 | - | - | - | - | - | - | - | - | - |
| | 1,5-3MPD | - | - | - | - | - | - | - | - | 9.7 | - | - | - | - | - | - | - | - |
| | 1,6-HDL | 0.5 | 1.1 | 2.0 | 5.8 | 9.9 | - | - | - | - | - | - | - | 9.8 | 9.0 | 10.1 | - | 0.5 |
| | 1,10 DDL | - | - | - | - | - | - | - | - | - | 7.9 | - | - | - | - | - | - | - |
| | 1,12-DDDL | - | - | - | - | - | - | - | - | - | - | 7.0 | - | - | - | - | 7.5 | - |
| | 1,20-IDL | - | - | - | - | - | - | - | - | - | - | - | 5.1 | - | - | - | - | - |
| | 1,4-CHDL | - | - | - | - | - | - | - | - | - | - | - | - | - | - | - | - | - |
| PCD Physical property value | OHV | 55.2 | 55.2 | 55.2 | 56.1 | 56.2 | 56.7 | 56.4 | 55.8 | 56.1 | 55.6 | 55.9 | 55.4 | 56.1 | 150.1 | 45.2 | 51.6 | 55.3 |
| | Number-average molecular weight | 2033 | 2033 | 2033 | 2000 | 1997 | 1979 | 1990 | 2011 | 2000 | 2018 | 2008 | 2026 | 2000 | 748 | 2483 | 2175 | 2029 |
| | Content of repeating unit (B) | 99.3 | 98.5 | 97.2 | 92.0 | 86.6 | 88.6 | 89.1 | 87.6 | 86.8 | 85.6 | 85.6 | 84.8 | 86.7 | 87.7 | 86.3 | 84.6 | 99.3 |
| | Content of 1,3-dioxan-2-one | 0.015 | 0.018 | 0.023 | 0.016 | 0.019 | 0.009 | 0.007 | 0.012 | 0.018 | 0.032 | 0.029 | 0.047 | 0.025 | 0.010 | 0.035 | 0.052 | 0.016 |
| | Ratio of the primary terminal OH | 100.0 | 100.0 | 100.0 | 100.0 | 100.0 | 100.0 | 100.0 | 100.0 | 100.0 | 100.0 | 100.0 | 100.0 | 97.0 | 100.0 | 100.0 | 99.9 | 98.2 |
| Evaluation result | Sunscreen resistance | ◎ | ◎ | ◎ | ◎ | ◎ | ◎ | ◎ | ◎ | ◎ | ○ | ○ | △ | ◎ | ◎ | ◎ | △ | ◎ |
| | Scratch resistance | ◎ | ◎ | ◎ | ◎ | ◎ | ◎ | ◎ | ◎ | ◎ | ○ | ○ | △ | ○ | ◎ | ◎ | △ | ◎ |
| | Compatibility | ○ | ◎ | ◎ | ◎ | ◎ | ◎ | ◎ | ◎ | ◎ | ◎ | ◎ | ◎ | ◎ | ◎ | ◎ | ○ | ○ |
| | Scratch recovery | ◎ | ◎ | ◎ | ◎ | ◎ | ◎ | ◎ | ◎ | ◎ | ◎ | ◎ | ○ | △ | ◎ | ◎ | △ | ◎ |

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| PCD Polymerization raw material (g) | 1,3-PRL | 371 | 425 | 298 | 338 | 251 | - | 319 | 760.9 |
| | 2-MPD | - | - | 77 | - | - | - | - | - |
| | 1,4-BDL | - | 25 | - | - | 146 | - | - | - |
| | 1,5-PDL | - | 25 | - | - | - | 264 | - | - |
| | 3-MPD | - | - | - | - | - | - | - | - |
| | 1,6-HDL | - | 25 | - | - | - | 280 | 81 | |
| | 1,10-DDL | - | - | - | - | - | - | - | - |
| | 1,12-DDDL | - | - | - | 97 | - | - | - | - |
| | 1,20-IDL | - | - | - | - | - | - | - | - |
| | 1,4-CHDL | - | - | - | - | - | - | - | 10.5 |
| | EC | 430 | - | 430 | 430 | 430 | 430 | 430 | - |
| | DMC | - | 569 | - | - | - | - | - | 1053.9 |
| Copolymerization composition mole (%) | 1,3-PRL | 100.0 | 85.8 | 85.0 | 89.9 | 67.0 | - | 84.0 | 99.1 |
| | 2-MPD | - | - | 15.0 | - | - | - | - | - |
| | 1,4-BDL | - | 4.7 | - | - | 33.0 | - | - | - |
| | 1,5-PDL | - | 4.9 | - | - | - | 48.0 | - | - |
| | 1,5-3MPD | - | - | - | - | - | - | - | - |
| | 1,6-HDL | - | 4.6 | - | - | - | 52.0 | 16.0 | - |
| | 1,10 DDL | - | - | - | - | - | - | - | - |
| | 1,12-DDDL | - | - | - | 10.1 | - | - | - | - |
| | 1,20-IDL | - | - | - | - | - | - | - | - |
| | 1,4-CHDL | - | - | - | - | - | - | - | 0.9 |
| PCD Physical property value | OHV | 57.0 | 57.1 | 56.2 | 56.0 | 61.9 | 55.8 | 57.5 | 55 |
| | Number-average molecular weight | 1969 | 1965 | 1997 | 2004 | 1813 | 2011 | 1952 | 2040 |
| | Content of repeating unit (B) | 100.0 | 83.5 | 83.3 | 70.9 | 64.1 | 0.0 | 78.8 | 98.9 |
| | Content of 1,3-dioxan-2-one | 0.009 | 0.019 | 0.018 | 0.015 | 0.011 | 0.016 | 0.082 | 0.053 |
| | Ratio of primary terminal OH | 100.0 | 93.5 | 100.0 | 100.0 | 100.0 | 100.0 | 100.0 | 94.1 |
| Evaluati on result | Sunscreen resistance | ◎ | × | × | × | × | × | × | × |
| | Scratch resistance | ◎ | △ | △ | × | × | × | × | △ |
| | Compatibility | × | ◎ | ◎ | ◎ | ◎ | ◎ | ◎ | ○ |
| | Scratch recovery | △ | × | × | × | × | × | × | × |

The OH value of the polycarbonate, the proportion of the unit (B) (% by mass), the content of 1,3-dioxan-2-one, the terminal OH purity, and evaluation results of each physical property of each Example and Comparative Example

are shown in Table 1 and Table 2.

In Table 1 and Table 2, "1,3-PRL" represents 1,3-propanediol, "2-MPD" represents 2-methyl-1,3-propanediol, "1,4-BDL" represents 1,4-butanediol, "1,5-PDL" represents 1,5-pentanediol, "3-MPD" represents 3-methyl-1,5-pentanediol, "1,6-HDL" represents 1,6-hexanediol, "1,10-DDL" represents 1,10-decanediol, "1,12-DDDL" represents 1,12-dodecanediol, "1,20-IDL" represents 1,20-icosanediol, "1,4-CHDL" represents 1,4-cyclohexanediol, "EC" represents ethylene carbonate, and "DMC" represents dimethyl carbonate.

It was found that the polycarbonate diol of the present embodiment was excellent in compatibility with solvent, and the polyurethane produced by using the polycarbonate diol of the present embodiment had excellent sunscreen resistance, scratch resistance, and scratch recovery.

## Claims

1. A polycarbonate diol composition comprising a polycarbonate diol having a repeating unit represented by the following formula (A):

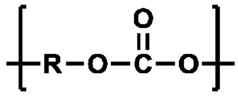
(A)

wherein R represents a divalent hydrocarbon group having 3 to 20 carbon atoms, and a terminal hydroxyl group, wherein the repeating unit represented by formula (A) comprises a repeating unit of the following formula (B) :

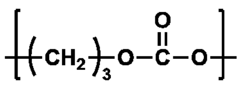
(B)

;

a proportion of the repeating unit represented by the formula (B) with respect to the total repeating unit represented by formula (A) is 84.0% by mass or more and 99.4% by mass or less;
a number-average molecular weight of the polycarbonate diol, determined as described in "[2. Number-average molecular weight]" in the description, is 300 or more and 20,000 or less;
a ratio of primary terminal OH of the polycarbonate diol is 95% or more; and
the polycarbonate diol composition comprises 1,3-dioxan-2-one, wherein a content of 1,3-dioxan-2-one with respect to the repeating unit represented by formula (A) is 0.005 to 0.045 in a molar ratio.

2. A polycarbonate diol composition comprising a polycarbonate diol having a repeating unit represented by the following formula (A):

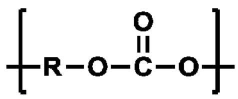
(A)

wherein R represents a divalent hydrocarbon group having 3 to 20 carbon atoms, and a terminal hydroxyl group, wherein the repeating unit represented by formula (A) comprises a repeating unit of the following formula (B) :

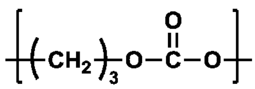
(B)

;

a proportion of the repeating unit represented by formula (B) with respect to the total repeating unit represented by formula (A) is 84.0% by mass or more and 99.4% by mass or less;
a number-average molecular weight of the polycarbonate diol is 300 or more and 20,000 or less; determined as described in "[2. Number-average molecular weight]" in the description; and
a proportion of a repeating unit represented by the following formula (C):

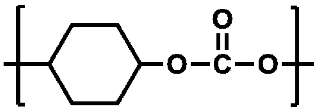 (C)

with respect to the total repeating unit represented by formula (A) is 1.0% by mass or less.

3. A method for producing the polycarbonate diol composition according to claim 1 or 2, comprising a step of adjusting the content of 1,3-dioxan-2-one with respect to a total amount of the polycarbonate diol.

**Patentansprüche**

1. Polycarbonatdiolzusammensetzung, umfassend ein Polycarbonatdiol mit einer durch die folgende Formel (A) dargestellten Wiederholungseinheit:

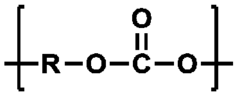 (A)

wobei R eine zweiwertige Kohlenwasserstoffgruppe mit 3 bis 20 Kohlenstoffatomen darstellt, und eine endständige Hydroxylgruppe,
wobei die durch die Formel (A) dargestellte Wiederholungseinheit eine Wiederholungseinheit der folgenden Formel (B) umfasst:

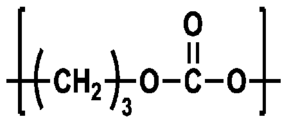 (B)

wobei ein Anteil der durch die Formel (B) dargestellten Wiederholungseinheit in Bezug auf die gesamte(n) durch die Formel (A) dargestellte(n) Wiederholungseinheit(en) 84,0 Massen-% oder mehr und 99,4 Massen-% oder weniger beträgt;
das Zahlenmittel des Molekulargewichts des Polycarbonatdiols, welches wie in "[2. Zahlenmittel des Molekulargewichts]" beschrieben bestimmt wird, 300 oder mehr und 20000 oder weniger beträgt;
der Anteil von primärem endständigen OH des Polycarbonatdiols 95% oder mehr beträgt; und
die Polycarbonatdiolzusammensetzung 1,3-Dioxan-2-on umfasst, wobei der Gehalt an 1,3-Dioxan-2-on in Bezug auf die durch Formel (A) dargestellte Wiederholungseinheit 0,005 bis 0,045 als Molanteil beträgt.

2. Polycarbonatdiolzusammensetzung, umfassend ein Polycarbonatdiol mit einer durch die folgende Formel (A) dargestellten Wiederholungseinheit:

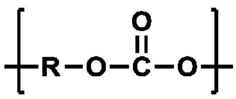 (A)

wobei R eine zweiwertige Kohlenwasserstoffgruppe mit 3 bis 20 Kohlenstoffatomen darstellt, und eine endständige Hydroxylgruppe,
wobei die durch die Formel (A) dargestellte sich Wiederholungseinheit eine Wiederholungseinheit der folgenden Formel (B) umfasst:

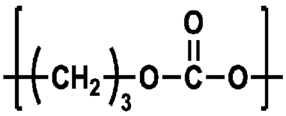 (B)

wobei ein Anteil der durch die Formel (B) dargestellten Wiederholungseinheit in Bezug auf die gesamte(n) durch die Formel (A) dargestellte(n) Wiederholungseinheit(en) 84,0 Massen-% oder mehr und 99,4 Massen-% oder weniger beträgt;
das Zahlenmittel des Molekulargewichts des Polycarbonatdiols, welches wie in "[2. Zahlenmittel des Molekulargewichts]" beschrieben bestimmt wird, 300 oder mehr und 20000 oder weniger beträgt; und
ein Anteil einer durch die folgende Formel (C) dargestellten Wiederholungseinheit:

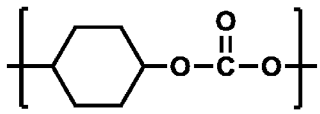 (C)

in Bezug auf die gesamte(n) durch Formel (A) dargestellte(n) Wiederholungseinheit(en) 1,0 Massen-% oder weniger beträgt.

**3.** Verfahren zur Herstellung der Polycarbonatdiolzusammensetzung nach Anspruch 1 oder 2, umfassend einen Schritt des Einstellens des Gehalts an 1,3-Dioxan-2-on in Bezug auf die Gesamtmenge des Polycarbonatdiols.

## Revendications

**1.** Composition de polycarbonate diol comprenant un polycarbonate diol comportant un motif répétitif représenté par la formule (A) suivante :

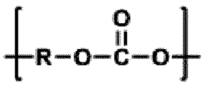 (A)

dans laquelle R représente un groupe hydrocarboné divalent comportant de 3 à 20 atomes de carbone, et un groupe hydroxyle terminal,
dans laquelle le motif répétitif représenté par la formule (A) comprend un motif répétitif de la formule (B) suivante :

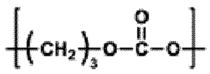 (B) ;

une proportion du motif répétitif représenté par la formule (B) par rapport au motif répétitif total représenté par la formule (A) est de 84,0 % en masse ou plus et de 99,4 % en masse ou moins ;
un poids moléculaire moyen en nombre du polycarbonate diol, déterminé tel que décrit dans « [2. Poids moléculaire moyen en nombre] » dans la description, est de 300 ou plus et de 20 000 ou moins ;
un rapport des OH terminaux primaires du polycarbonate diol est de 95 % ou plus ; et
la composition de polycarbonate diol comprend de la 1,3-dioxan-2-one, dans laquelle une teneur de 1,3-dioxan-2-one par rapport au motif répétitif représenté par la formule (A) est de 0,005 à 0,045 en rapport molaire.

**2.** Composition de polycarbonate diol comprenant un polycarbonate diol comportant un motif répétitif représenté par la formule (A) suivante :

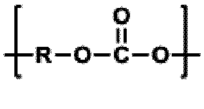 (A)

dans laquelle R représente un groupe hydrocarboné divalent comportant de 3 à 20 atomes de carbone, et un groupe hydroxyle terminal,
dans laquelle le motif répétitif représenté par la formule (A)comprend un motif répétitif de la formule (B) suivante :

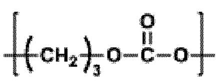 (B) ;

une proportion du motif répétitif représenté par la formule (B) par rapport au motif répétitif total représenté par la formule (A) est de 84,0 % en masse ou plus et de 99,4 % en masse ou moins ;
un poids moléculaire moyen en nombre du polycarbonate diol est de 300 ou plus et de 20 000 ou moins ; déterminé tel que décrit dans « [2. Poids moléculaire moyen en nombre] » dans la description ; et
une proportion d'un motif répétitif représenté par la formule (C) suivante :

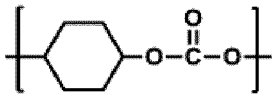 (C)

par rapport au motif répétitif total représenté par la formule (A) est de 1,0 % en masse ou moins.

**3.** Procédé de production de la composition de polycarbonate diol selon la revendication 1 ou 2, comprenant une étape d'ajustement de la teneur de 1,3-dioxan-2-one par rapport à une quantité totale du polycarbonate diol.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004035636 A
- WO 2002070584 A
- WO 2006088152 A
- JP 2014185320 A